# FASCICULE DE BREVET EUROPEEN

(11) **EP 1 377 166 B1**
(45) Date de publication et mention de la délivrance du brevet: **13.02.2008**
(21) Numéro de dépôt: 02732823.6
(22) Date de dépôt: 12.04.2002
(51) Int. Cl.: A21B 1/48, A21B 3/04, A21D 8/06, A21D 13/04

(54) **PROCEDE DE FABRICATION DE GALETTES A BASE DE FARINE DE CEREALES**
VERFAHREN ZUR HERSTELLUNG VON FLADEN AUF GETREIDEMEHL
METHOD FOR THE PRODUCTION OF CEREAL-FLOUR-BASED PATTIES

(30) Priorité: 13.04.2001 FR 0105133
(43) Date de publication de la demande: 07.01.2004
(73) Titulaire: Spinelli, Marc, 83440 Tourrettes (FR); Pertuza, Jean-Luc, 83440 Tourrettes (FR)
(72) Inventeur: Spinelli, Marc, 83440 Tourrettes (FR); Pertuza, Jean-Luc, 83440 Tourrettes (FR)
(86) Numéro de dépôt international: PCT/FR2002/001290
(87) Numéro de publication internationale: WO 2002/082909

(56) Documents cités:
- EP-A- 0 620 975
- DE-A- 2 201 884
- FR-A- 2 285 076
- FR-A- 2 377 157
- FR-A- 2 725 112
- FR-A- 2 765 076
- US-A- 3 922 370

## Description

La présente invention se rapporte à un nouveau procédé de fabrication de galettes fraîches à base de farine de riz. La présente invention concerne également toute galette fraîche à base de farine de riz non modifiée conditionnée ou non.

Les galettes à base de farine de riz sont utilisées pour la préparation des nems, des rouleaux de printemps et autres spécialités de la cuisine asiatique. La préparation de ces galettes à base de farine de riz est effectuée de façon artisanale en Asie. On peut notamment citer comme procédé de préparation artisanale de galettes à base de farine de riz, le procédé qui consiste à déposer une pâte à base de farine de riz et éventuellement de fécule sur une crêpière, les galettes cuites étant décollées à l'aide d'un rouleau en chiffon et mises à sécher à l'air libre sur des nattes de bambou tressé.

Ce type de préparation artisanale présente deux inconvénients majeurs. D'une part, les variations dimensionnelles des galettes obtenues de façon artisanale et principalement au niveau de leur épaisseur rendent ces galettes cassantes à cause d'une déshydratation non homogène. D'autre part, les galettes à base de farine de riz produites en Asie puis vendues dans le commerce sont présentées sous forme de galettes desséchées ce qui nécessite avant toute utilisation une réhumidification. Cette dernière peut entraîner un excès d'eau préjudiciable lors de la cuisson par friture des nems. Il existe donc un réel besoin de galettes de riz conditionnées obtenues de façon automatique sous forme de galettes fraîches de taille régulière et utilisables sans avoir à les humidifier.

L'art antérieur connaît déjà des procédés et des dispositifs pour la fabrication automatique de galettes à base de farine de riz. On peut citer notamment le procédé décrit dans la demande de brevet français N° 2 725 112. Ce procédé permet la cuisson par contact direct sur une surface chaude combinée simultanément à un séchage indirect par rayonnement infra-rouge et à un mouvement d'air, ces derniers agissant alternativement recto et verso sur les deux faces de la mince pellicule de pâte. Ainsi, le procédé décrit dans la demande de brevet français N° 2 725 112 permet d'obtenir un film de pâte sans fin qui est ultérieurement débité en petites surfaces pour être garnies ou roulées. Le procédé décrit dans la demande de brevet français N° 2 377 157 décrit la fabrication de galettes à base de farine de riz avec le dépôt d'une pâte liquide sur des plaques rigides ou des tissus tendus avant un séchage et une découpe. Le dispositif décrit dans la demande de brevet français N° 2 738 992 comprend des moules portant une empreinte en creux dans lesquels est versée une quantité prédéterminée d'une pâte relativement liquide pour la fabrication de galettes, notamment de riz.

Cependant, les différents procédés traditionnels utilisent des farines de riz modifiées pour augmenter la cohésion des galettes et éviter que celles-ci ne cassent au séchage. Cette modification peut notamment consister soit à faire décanter la farine de riz avant son utilisation ce qui permet son enrichissement en amidon, soit en un ajout de fécule à la farine de riz utilisée pour la confection des nems. Cet ajout de fécule permettrait d'obtenir une meilleure cohésion, une meilleure élasticité et un caractère moins collant de la pâte. Un autre type de modification consiste à arroser abondamment la farine déposée au soleil sur des tissus tendus. Ces conditions entraînent la fermentation de la farine avant son utilisation.

La présente invention entend remédier aux inconvénients de l'art antérieur en proposant un procédé et un dispositif qui permettent d'obtenir de façon automatique des galettes fraîches à base de farine de riz. Ce procédé est remarquable car il ne nécessite pas une modification de la farine avant son utilisation. Dans ce dessein, la présente invention est du type décrit ci-dessous et elle est remarquable, dans son acception la plus large, en ce que ce procédé est utilisable pour tout type de galettes quelle que soit la farine de céréales utilisée.

L'invention concerne donc un nouveau procédé de fabrication de galettes fraîches à base de farine de céréales caractérisé en ce qu'il comprend les étapes décrites dans la revendication 1.

La bande de transport sur laquelle est déposée la pâte à base de farine de riz à l'étape (a) du procédé selon l'invention est constituée d'un tissu de fibre de verre imprégné de polytétrafluoréthylène (PTFE). Le comportement chimique inerte du PTFE permet son utilisation en contact avec des denrées alimentaires. De plus, grâce à la combinaison des propriétés des fibres de verre et du PTFE, cette bande présente de nombreux avantages pour son utilisation pour la fabrication de galettes à base de farine non modifiée de céréales. En effet, cette combinaison permet d'obtenir une bande avec les caractéristiques suivantes :
- une surface très anti-adhésive qui facilite la récupération des galettes cuites;
- une grande résistance à la température puisque cette combinaison présente une grande stabilité thermique et peut être utilisée dans une plage de température de -200°C à +260°C;
- une haute résistance à la traction, une bonne stabilité dimensionnelle et une faible dilatation thermique principalement dues aux propriétés du tissu en fibres de verre.

La pâte utilisée à l'étape (a) du procédé selon l'invention est une pâte liquide. La bande de transport sur laquelle est déposée la pâte à base de farine de céréales à l'étape (a) du procédé selon l'invention est utilisée comme un récipient. Le dépôt de cette pâte liquide est réalisé grâce à un doseur de pâte et un diffuseur de pâte. Le doseur de pâte permet l'écoulement en continu de la pâte sur le diffuseur de pâte et en contrôle le débit. Le diffuseur de pâte permet un étalement régulier de la pâte sur la bande de transport tant en largeur qu'en épaisseur.

La cuisson de la pâte à base de farine non modifiée de riz est avantageusement réalisée par la vapeur. Tout moyen de cuisson par la vapeur connu de l'homme du métier est utilisable dans le cadre de l'invention à condition qu'il permette d'obtenir une quantité de vapeur adéquate et une température comprise entre 90° et 120°C. L'utilisation de la vapeur permet de garantir la stabilité de la température tout au long de la cuisson de la pâte et sur- toute la surface de la bande de transport chauffée. La quantité de vapeur adéquate est fonction de la vitesse à laquelle la bande de transport défile, ces deux paramètres étant étroitement liés. On peut notamment citer que pour une bande de transport défilant à 5 10⁻² m/sec, la quantité de vapeur adéquate est de l'ordre de 24 10⁻³ m³. De façon avantageuse, la bande de transport est chauffée par la vapeur provenant d'un bac à eau au-dessus duquel elle circule. La bande de transport ainsi chauffée peut également faire office de bande de cuisson. La vapeur provenant du bac de cuisson est avantageusement produite par un système de chauffe au moyen d'une rampe de gaz. Cependant, il est évident que tout autre moyen de chauffe connu de l'homme du métier pour produire à partir du bac à eau de la vapeur est utilisable dans le cadre de cette invention. Dans un autre mode de réalisation du procédé selon l'invention, la cuisson de la pâte peut être réalisée grâce à l'injection de vapeur par des rampes à injection créant un nuage de vapeur. Ces rampes à injection sont également appelées humidificateur.

Plus particulièrement, la cuisson de la pâte est réalisée dans un tunnel de cuisson qui permet la concentration de la vapeur ainsi produite. Ce tunnel de cuisson peut se présenter sous la forme d'un tunnel physique à simple ou double cloche.

A l'étape (c) du procédé objet de l'invention, le procédé décrit dans la demande de brevet français N° 2 377 157 décrit la fabrication de galettes à base de farine de riz avec le dépôt d'une pâte liquide sur des plaques rigides ou des tissus tendus avant un séchage et une découpe. Elles sont par exemple garnies d'une farce choisie en fonction du type de galettes à produire. Dans le cadre de galettes à base de farine de riz, cette farce peut être constituée par les différents produits nécessaires à la garniture des nems. Les galettes à base de farine de riz garnies enroulées ou pliées peuvent avantageusement subir une pré-cuisson ou une cuisson en ligne par trempage dans un bain d'huile chaude. Elles peuvent également être cuites dans un four ou par tout autre type de pré-cuisson ou cuisson finale connu de l'homme du métier. Le procédé décrit dans la demande de brevet français N° 2 377 157 décrit la fabrication de galettes à base de farine de riz avec le dépôt d'une pâte liquide sur des plaques rigides ou des tissus tendus avant un séchage et une découpe. les galettes sont directement utilisées, elles sont découpées, garnies, enroulées ou pliées sur la bande de transport.

Les galettes découpées ou prédécoupées à l'étape (c) du procédé selon l'invention peuvent être de taille et de forme variées en fonction de l'utilisation envisagée. Elles peuvent notamment présenter une forme rectangulaire, triangulaire, carrée ou ronde. La découpe des galettes à l'étape (c) est réalisée grâce à un système de découpe des galettes qui peut, de façon avantageuse, être constitué par soit un système d'emboutissage, soit par un rouleau de découpe comprenant une ellipse continue en surépaisseur. Pour une pré-découpe des galettes à l'étape (c) du procédé, le système d'emboutissage ou l'ellipse en surépaisseur du rouleau de découpe sont avantageusement en dents de scie.

De préférence, la pâte à base de farine de riz utilisée à l'étape (a) du procédé selon l'invention a été homogénéisée préalablement à son utilisation. Cette homogénéisation peut également être appelée lissage. Tout moyen d'homogénéisation d'une pâte connu de l'homme du métier est utilisable. On peut notamment citer une homogénéisation par pression, par action de vortex ou de batteurs. Grâce à cette homogénéisation, les galettes obtenues par le procédé de l'invention sont plus solides et plus résistantes à la traction.

Le procédé selon l'invention est tout particulièrement adapté à l'utilisation d'une farine de riz et, de préférence, d'une farine non modifiée de riz. De façon avantageuse, la pâte à base de farine non modifiée de riz utilisée à l'étape (a) du procédé selon l'invention est uniquement constituée de farine non modifiée de riz, d'eau, et d'un ou plusieurs additifs choisis parmi le sel, le sucre, les colorants, les arômes, le chocolat et les épices.

L'invention concerne également des galettes fraîches à base de farine de riz réalisées à partir de farine non modifiée de riz, d'eau, et d'un ou plusieurs additifs choisis parmi le sel, le sucre, les colorants, les aromes, le chocolat et les épices. L'invention concerne également des galettes fraîches à base de farine de riz uniquement constituée de farine non modifiée de riz, d'eau, et d'un ou plusieurs additifs choisis parmi le sel, le sucre, les colorants, les arômes, le chocolat et les épices. Ces galettes peuvent être avantageusement conditionnées sur du papier sulfurisé double face ou du papier paraffiné double face ou du plastique alimentaire.

L'invention concerne également le dispositif pour la mise en oeuvre du procédé de l'invention. Ce dispositif est avantageusement constitué par :
- un doseur de pâte (1) qui permet l'écoulement en continu de la pâte sur le diffuseur de pâte (2) et qui en contrôle le débit ;
- un diffuseur de pâte (2) qui permet un étalement régulier de la pâte sur la bande de transport (3) tant en largeur qu'en épaisseur ;
- une bande de transport et éventuellement de cuisson (3) constituée d'un tissu de fibre de verre imprégné de polytétrafluoréthylène (PTFE) ;
- un bac d'eau (4) ;
- un système de chauffage (5) qui permet la production de vapeur en chauffant le bac à eau (4) ;
- un tunnel de cuisson (6) qui permet la concentration de la vapeur produite soit par injection, soit par évaporation ;
- une hotte d'évacuation de la chaleur et/ou de la vapeur (7);
- un système de découpe et éventuellement de pré-découpe (8).

L'invention concerne également le dispositif permettant la fabrication puis la garniture de galettes à base de farine de riz selon le procédé de l'invention. Ce dispositif est avantageusement constitué par :
- un doseur de pâte (1) ;
- un diffuseur de pâte (2) ;
- une bande de transport et éventuellement de cuisson (3) constituée d'un tissu de fibre de verre imprégné de polytétrafluoréthylène (PTFE) ;
- un bac d'eau (4);
- un système de chauffage (5);
- un tunnel de cuisson (6);
- une hotte d'évacuation de la chaleur et/ou de la vapeur (7);
- des systèmes de découpe et éventuellement de pré-découpe (8) et (11);
- un doseur (9) qui permet le dépôt d'une farce sur la pâte cuite découpée;
- un système d'enroulement ou de pliage (10) des galettes garnies;
- un système de cuisson assurant la cuisson des galettes garnies enroulées ou pliées.

Le système de découpe ou de pré-découpe (8) peut être constitué par soit un système d'emboutissage, soit un rouleau de découpe comprenant une ellipse en surépaisseur respectivement continue ou en dents de scie.

On comprendra mieux l'invention à l'aide de la description, faite ci-après à titre purement explicatif, d'un mode de réalisation de l'invention, en référence aux figures annexées :
- la figure 1 représente une vue schématique du dispositif permettant la mise en oeuvre du procédé pour la fabrication de galettes fraîches à base de farine de riz.
- la figure 2 représente une vue schématique du dispositif selon l'invention permettant la mise en oeuvre du procédé pour la fabrication de galettes à base de farine de riz associé à un dispositif pour la garniture des galettes ainsi obtenues en vue de la préparation automatisée de nems.

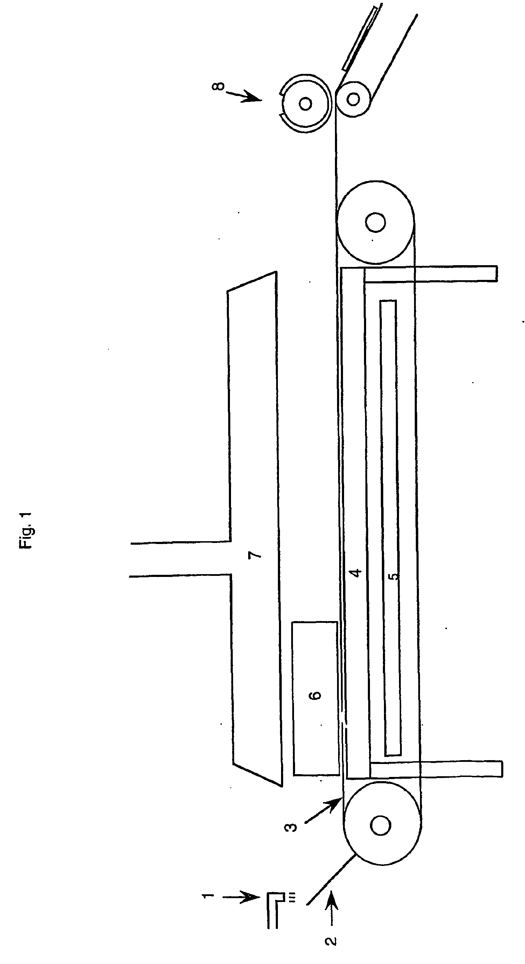

La pâte à base de farine non modifiée de riz est mise dans un doseur de pâte (1) après homogénéisation. Ce dernier permet l'écoulement en continu de la pâte sur le diffuseur de pâte (2) et en contrôle le débit. Grâce au diffuseur de pâte, la pâte est régulièrement étalée sur la bande de transport tant en largeur qu'en épaisseur. La bande de transport constituée d'un tissu de fibre de verre imprégné de polytétrafluoréthylène (PTFE) est chauffée grâce au système de chauffage (5) qui permet la production de vapeur en chauffant le bac à eau (4) et sert de bande de cuisson. Au niveau du tunnel de cuisson (6) dans lequel la vapeur produite soit par injection, soit par évaporation est concentrée, la cuisson de la pâte se poursuit. La chaleur et la vapeur produite sont évacuées au moyen d'une hotte d'évacuation (7). En bout de la bande de transport, la pâte cuite est récupérée pour être déposée sur un convoyeur sur lequel se trouve, par exemple, du papier sulfurisé double face. La pâte est découpée ou pré-découpée sur le convoyeur par un système de découpe ou de pré-découpe (8) constitué par soit un système d'emboutissage, soit un rouleau de découpe comprenant une ellipse en surépaisseur respectivement continue ou en dents de scie. Ces différentes étapes sont schématisées sur la figure 1.

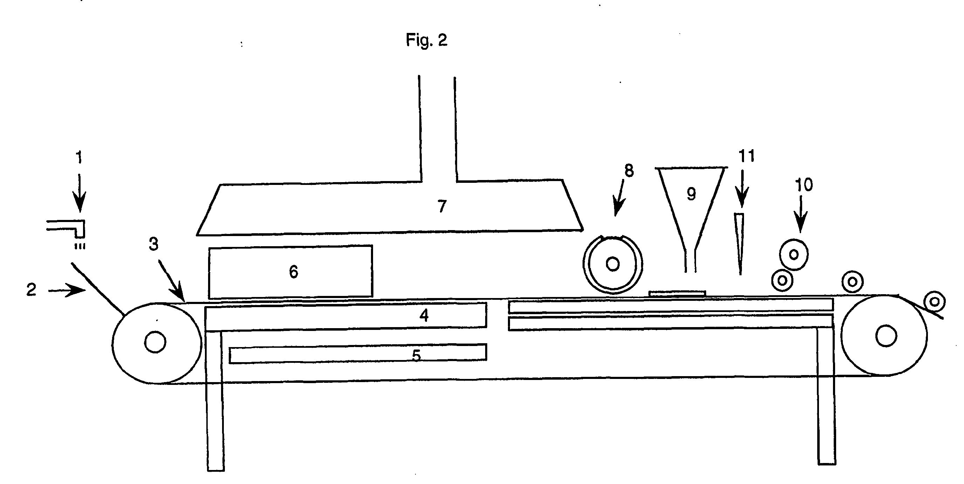

De façon alternative, la figure 2 présente la préparation automatisée de nems. Les premières étapes de cette préparation sont identiques à celles décrites ci-dessus. Par contre, la bande de pâte cuite reste sur la bande de transport sur laquelle elle est découpée sous forme de galettes. La découpe est réalisée grâce à un système de découpe (8) constitué par soit un système d'emboutissage, soit un rouleau de découpe comprenant une ellipse continue en surépaisseur. Un doseur (9) permet le dépôt de la farce pour nems sur les galettes découpées avant que les galettes ne soient à nouveau découpées par un système de découpe (11). Les galettes ainsi farcies sont soit enroulées, soit pliées grâce à un système d'enroulement ou de pliage (10). Les nems ainsi obtenus sont cuits dans un bain d'huile chaude.

## Revendications

1. Procédé de fabrication de galettes fraîches à base de farine de riz **caractérisé en ce qu'**il comprend les étapes suivantes :
a) le dépôt d'une pâte à base de farine de riz sur une bande de transport constituée d'un tissu de fibre de verre imprégné de polytétrafluoréthylène ;
b) la cuisson de ladite pâte par la vapeur dans un tunnel de cuisson qui permet la concentration de la vapeur avec une quantité de vapeur adéquate et une température comprise entre 90° et 120°C où la bande de transport fait également office de bande de cuisson et est chauffée par la vapeur provenant d'un bac à eau au-dessus duquel elle circule ou grâce à l'injection de vapeur par des rampes à injection créant un nuage de vapeur;
c) découpage, garnissage, enroulage ou pliage des galettes directement sur la bande de transport.

2. Procédé selon la revendication 1, **caractérisé en ce que** ladite vapeur provenant du bac de cuisson est produite par un système de chauffe au moyen d'une rampe de gaz.

3. Procédé selon l'une quelconque des revendications 1 à 2, **caractérisé en ce que**, à l'étape (c), la découpe des galettes est réalisée grâce à un système de découpe des galettes constitué par soit un système d'emboutissage, soit un rouleau de découpe comprenant une ellipse continue en surépaisseur.

4. Procédé selon l' une quelconque des revendications 1 ou 2, **caractérisé en ce que**, à l'étape (c), une pré-découpe des galettes est réalisée grâce à un système de pré-découpe des galettes constitué par soit un système d'emboutissage en dents de scie, soit un rouleau de découpe comprenant une ellipse en surépaisseur en dents de scie.

5. Procédé selon l'une quelconque des revendications précédentes, **caractérisé en ce que** la pâte à base de farine de riz utilisée à l'étape (a) a été homogénéisée préalablement à son utilisation.

6. Procédé selon l'une quelconque des revendications précédentes, **caractérisé en ce que** la farine de riz utilisée est une farine non modifiée de riz.

7. Procédé selon l'une quelconque des revendications précédentes, **caractérisé en ce que** la pâte à base de farine de riz utilisée à l'étape (a) est uniquement constituée de farine non modifiée de riz, d'eau, et d'un ou plusieurs additifs choisis parmi le sel, le sucre, les colorants, les arômes, le chocolat et les épices.

## Claims

1. Process for the production of fresh rice-flour-based patties **characterized in that** it includes the following stages:
a) deposition of a rice-flour-based dough on a conveyor consisting of a glass fibre fabric impregnated with polytetrafluoroethylene;
b) the baking of the said dough by steam in a tunnel oven which permits the concentration of the steam with an appropriate amount of steam and a temperature between 90° and 120°C where the conveyor belt also serves as a baking tray and is heated by the steam coming from a water trough above which it is running or by means of steam injection from injection equipment creating a cloud of steam;
c) cutting, filling, rolling up or folding of patties directly on the conveyor belt.

2. The process in claim 1, **characterized in that** the said steam originating from the baking chamber is produced by a heating system by means of gas burners.

3. A process in either claim 1 or claim 2, **characterized in that**, in stage (c), the cutting of patties is carried out by means of either a stamping system or a cutting roller consisting of a protruding continual ellipse.

4. A process in either claim 1 or claim 2, **characterized in that**, in stage (c), pre-cutting of the patties is carried out by means of a patty pre-cutting system consisting of either a serrated stamping system, or by a cutting roller comprising a protruding serrated ellipse.

5. A process in either of the above claims, **characterized in that**, the rice-flour-based dough used in stage (a) has been homogenized prior to use.

6. A process in either of the above claims, **characterized in that**, the rice flour used is unmodified rice flour.

7. A process in either of the above claims, **characterized in that** the rice-flour-based dough used in stage (a) exclusively consists of unmodified rice flour, water and one or more additives chosen from salt, sugar, colouring agents, flavourings, chocolate and spices.

## Patentansprüche

1. Verfahren zur Herstellung von frischen Fladen aus Reismehl, **dadurch gekennzeichnet, dass** es die folgenden Schritte umfasst:
a) das Aufbringen eines Teiges aus Reismehl auf ein Transportband, welches aus einem mit Polytetrafluorethylen imprägniertem Fiberglasgewebe besteht;
b) das Garen des besagten Teiges mittels Dampf in einem Gartunnel, welcher die Konzentration des Dampfes mit einer angemessenen Dampfmenge und einer Temperatur zwischen 90°C und 120°C erlaubt, wobei das Transportband ebenfalls als Garband dient und von dem aus einem Wasserbehälter stammendem Dampf, über welchem das Transportband hinwegläuft, oder mittels Einspritzung von Dampf über Einspritzrampen, welche eine Dampfwolke erzeugen, erhitzt wird;
c) das Zuschneiden, Füllen, Rollen oder Falten der Fladen direkt auf dem Transportband.

2. Verfahren gemäß Anspruch 1, **dadurch gekennzeichnet, dass** besagter aus dem Garbehälter stammender Dampf mit Hilfe eines Heizsystems mit einer Gasrampe erzeugt wird.

3. Verfahren gemäß einem der Ansprüche 1 bis 2, **dadurch gekennzeichnet, dass** in Schritt (c) das Zuschneiden der Fladen mit Hilfe eines Fladen-Zuschneidesystems erfolgt, welches entweder aus einem Stanzsystem, oder aus einer Schneidrolle mit einer durchgehenden elliptischen Verdickung besteht.

4. Verfahren gemäß einem der Ansprüche 1 oder 2, **dadurch gekennzeichnet, dass** in Schritt (c) ein Vorzuschnitt der Fladen mit Hilfe eines Fladen-Vorschneidesystems erfolgt, welches entweder aus einem Stanzsystem mit Sägezähnen, oder aus einer Schneidrolle mit einer elliptischen Verdickung mit Schneidzähnen besteht.

5. Verfahren gemäß einem der vorstehenden Ansprüche, **dadurch gekennzeichnet, dass** der in Schritt (a) verwendete Teig aus Reismehl vor seiner Verarbeitung homogenisiert wurde.

6. Verfahren gemäß einem der vorstehenden Ansprüche, **dadurch gekennzeichnet, dass** es sich bei dem verwendeten Reismehl um nicht modifiziertes Reismehl handelt.

7. Verfahren gemäß einem der vorstehenden Ansprüche, **dadurch gekennzeichnet, dass** der in Schritt (a) verwendete Teig aus Reismehl nur aus nicht modifiziertem Reismehl, Wasser, und einem oder mehreren Zusatzstoffen wie entweder Salz, Zucker, Farbstoffen, Aromen, Schokolade und Gewürzen besteht.
